# EUROPÄISCHE PATENTSCHRIFT

(11) **EP 2 187 281 B1**
(45) Veröffentlichungstag und Bekanntmachung des Hinweises auf die Patenterteilung: **17.04.2013**
(21) Anmeldenummer: 08019861.7
(22) Anmeldetag: 13.11.2008
(51) Int. Cl.: G05B 19/05, G06F 1/32

(54) **Automatisierungsgerät und Verfahren zu dessen Betrieb**
Automation device and method of its operation
Appareil d'automatisation et son procédé de fonctionnement

(43) Veröffentlichungstag der Anmeldung: 19.05.2010
(73) Patentinhaber: Siemens Aktiengesellschaft, 80333 München (DE)
(72) Erfinder: August, Joachim, 90482 Nürnberg (DE); Brousek, Norbert, 90766 Fürth (DE); Jöhnssen, Oliver, 91058 Erlangen (DE); Ohlmann, Joachim, 91074 Herzogenaurach (DE)

(56) Entgegenhaltungen:
- DE-A1-102006 062 479
- DE-U1-202005 012 557
- US-A1- 2007 220 293
- US-B1- 6 658 576
- US-B1- 7 248 146

## Beschreibung

Die Erfindung betrifft ein Automatisierungsgerät mit einem Steuerungsprogramm zur Steuerung und/oder Überwachung eines technischen Prozesses, insbesondere eines industriellen Prozesses, wie z. B. eines Fertigungsprozesses, wobei das Steuerungsprogramm ein Hauptprogramm und ein oder mehrere davon aufgerufene oder eingeplante Unterprogramme umfasst.

Wie bereits in der DE 197 40 550 erwähnt ist, sind aus dem Siemens-Katalog ST 70, Ausgabe 1996, Kapitel 3, 4 und 8, als Automatisierungsgeräte eine speicherprogrammierbare Steuerung sowie ein Programmiergerät zum Erstellen eines Steuerprogramms für eine derartige speicherprogrammierbare Steuerung bekannt. Wesentliche Bestandteile dieser speicherprogrammierbaren Steuerung sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Steuerungsprogramm ab, welches ein Programmierer mit einem mit einem Software-Werkzeug versehenen Programmiergerät erstellt und welches zur Lösung einer Automatisierungsaufgabe vorgesehen ist. Während der zyklischen Bearbeitung liest die CPU-Einheit zunächst die Signalzustände an allen physikalischen Prozesseingängen ab und bildet ein Prozessabbild der Eingänge. Das Steuerungsprogramm wird weiter unter Einbeziehung interner Zähler, Merker und Zeiten schrittweise abgearbeitet, und schließlich hinterlegt die CPU-Einheit die errechneten Signalzustände im Prozessabbild der Prozessausgänge, von welchem diese Signalzustände zu den physikalischen Prozessausgängen gelangen. Ein Steuerungsprogramm umfasst gewöhnlich Software-Funktionsbausteine (hier allgemein als Unterprogramme bezeichnet), die einen Betrieb der Signal- und/oder Funktions- und/oder Kommunikationsbaugruppen steuern, beeinflussen, koordinieren oder ermöglichen. Diese Funktionsbausteine werden von einem besonderen Steuerungsprogrammabschnitt, der hier allgemein als Hauptprogramm bezeichnet wird, entweder mittel- oder unmittelbar aufgerufen oder eingeplant, wobei Einplanen sich z. B. darauf bezieht, dass ein Unterprogramm als Task in einem festen Zeitraster abläuft.

Allgemein ist der Begriff "Automatisierungsgerät" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung industrieller technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Teilweise wird heute von Benutzern derartiger Automatisierungsgeräte eine Möglichkeit zur Energieeinsparung nachgefragt, die selbstverständlich die Funktionsfähigkeit der Automatisierungsgeräte nicht beeinflussen soll.

Aus der Druckschrift US 2007/0220293 A1 - Takase "Systems and methods for managing power consumption in data processors using execution mode selection" ist ein Verfahren und eine Anordnung bekannt, mit der die Leistungsaufnahme eines mikroprozessorgesteuerten Gerätes reduziert werden kann. Dabei wird vorgeschlagen, zur Reduzierung der Leistungsaufnahme verschiedene Betriebszustände zu definieren, wobei je nach erforderlicher Leistungsabsenkung die Taktrate eines Mikroprozessors gesenkt wird oder Prozesse, die zur parallelen Abarbeitung vorgesehen sind, erst nacheinander ausgeführt werden. Zur Steuerung der Leistungsaufnahme schlägt dabei diese Druckschrift vor, für jedes auszuführende Programm eine Information hinsichtlich des mit einer Ausführung jeweils verknüpften Energiebedarfs festzustellen und anhand dieser Informationen die tatsächliche Leistungsaufnahme mit einer vorgegebenen Maximalleistung in Einklang zu bringen.

Entsprechend besteht eine Aufgabe der Erfindung darin, ein Automatisierungsgerät und ein Verfahren zu dessen Betrieb anzugeben, das es ermöglicht, in einem Automatisierungssystem, in dem üblicherweise mehrere derartige Automatisierungsgeräte zusammengefasst sind, möglichst viele Komponenten abzuschalten, um so Energie im laufenden Betrieb einzusparen. Dies gilt zum einen für solche Automatisierungsgeräte, die im Automatisierungssystem als zentrale Einheiten fungieren, z. B. Leitsysteme, speicherprogrammierbare Steuerungen und dergleichen, aber auch für von dem Automatisierungssystem umfasste Automatisierungsgeräte, die als Peripheriegeräte fungieren und insoweit z. B. mit im technischen Prozess befindlicher Sensorik oder Aktorik wechselwirken. In komplexen Automatisierungssystemen sind die einzelnen Automatisierungs-geräte untereinander vernetzt, z. B. mittels eines Feldbusses, und die jeweiligen Kommunikationsverbindungen sollen auch in einem zur Energieeinsparung vorgesehenen Standby-Betrieb weiter aufrechterhalten werden. Letzteres zielt vor allem auf die Kundenakzeptanz, weil sich gezeigt hat, dass Anlagenbetreiber Bedenken hinsichtlich der Abschaltung einzelner oder aller Kommunikationsverbindungen haben, aus Angst davor, dass nach einem erneuten Hochfahren des Automatisierungssystems, einzelner davon umfasster Geräte und/oder des technischen Prozesses, im Folgenden kurz als Anlage bezeichnet, bestimmte Verbindungen nicht mehr aufgebaut werden oder ein solcher Aufbau zu lange dauert. Im Vordergrund steht insoweit ein Automatisierungssystem, das mit einer Minimalfunktionalität betriebsbereit gehalten wird, während einzelne Geräte oder Teile einzelner Gerät abgeschaltet oder deaktiviert werden.

Diese Aufgabe wird erfindungsgemäß mit einem Automatisierungsgerät mit den Merkmalen des Anspruchs 1 gelöst. Derartige Automatisierungsgeräte können von einem komplexen Automatisierungssystem in größerer Anzahl umfasst sein, so dass sich für das Automatisierungssystem die mit dem erfindungsgemäßen Automatisierungsgerät erreichbaren Vorteile multiplizieren. Dazu ist bei einem Automatisierungsgerät mit einem Steuerungsprogramm zur Steuerung und/oder Überwachung eines technischen Prozesses, wobei das Steuerungsprogramm ein Hauptprogramm und ein oder mehrere davon aufgerufene oder eingeplante Unterprogramme umfasst, vorgesehen, dass das Steuerungsprogramm ein Normalbetriebsunterprogramm und zumindest ein Sonderbetriebsunterprogramm umfasst, dass das Hauptprogramm Befehle für einen Aufruf des Normalbetriebsunterprogramms oder eines der Sonderbetriebsunterprogramme in Abhängigkeit von einem Status des Automatisierungsgerätes umfasst, dass das Normalbetriebsunterprogramm hinsichtlich des Aufrufens und Einplanens von Unterprogrammen an die Stelle des Hauptprogramms bei bisherigen Automatisierungsgeräten tritt und dass das oder jedes Sonderbetriebsunterprogramm für eine reduzierte Anzahl von Unterprogrammen Befehle für deren Aufruf oder Einplanung umfasst.

Die Erfindung geht von der Erkenntnis aus, dass zur Energieeinsparung einzelne Funktionen von Automatisierungsgeräten in einem Automatisierungssystem, das mindestens ein Automatisierungsgerät umfasst, abgeschaltet werden können. Dies gilt speziell dann, wenn der jeweilige technische Prozess, auf den sich die mit dem Automatisierungssystem realisierte Automatisierungslösung bezieht, inaktiv ist, z. B. über Nacht, während des Wochenendes, während Umrüstzeiten, während Betriebsferien usw. Die Erfindung setzt diese Erkenntnis so um, dass an die Stelle eines Hauptprogramms bisheriger Automatisierungsgeräte ein hier zur Unterscheidung als Normalbetriebsunterprogramm bezeichnetes Unterprogramm tritt. D. h. das Normalbetriebsunterprogramm umfasst sämtliche Befehle zum Aufrufen oder Einplanen der von dem jeweiligen Automatisierungsgerät ausgeführten Unterprogramme, die normalerweise ein Hauptprogramm umfassen würde. Das Normalbetriebsunterprogramm kann von dem gleichwohl noch vorhandenen Hauptprogramm des Automatisierungsgerätes aufgerufen werden und zwar in Abhängigkeit von einem Status des Automatisierungsgerätes. Beim Anschalten des Automatisierungsgerätes führt dessen Basisfunktionalität dazu, dass nach Abschluss einer Initialisierungsphase und dergleichen in jedem Fall das Hauptprogramm aufgerufen wird und das Hauptprogramm umfasst Befehle wie sie ein Programmierer zur Umsetzung einer jeweiligen Automatisierungslösung vorsieht. Gemäß dem Ansatz der Erfindung werden solche Befehle aber nicht mehr dem Hauptprogramm zugeordnet, sondern dem Normalbetriebsunterprogramm, wobei das Hauptprogramm im Wesentlichen auf die Abfrage des besonderen Status des Automatisierungsgerätes und einen eventuellen Aufruf des Normalbetriebsunterprogramms in Abhängigkeit von diesem Status reduziert ist. Neben dem Normalbetriebsunterprogramm ist zumindest ein weiteres Unterprogramm vorgesehen, das in Abhängigkeit von dem Status des Automatisierungsgerätes durch das Hauptprogramm aufgerufen wird. Dieses wird hier zur Unterscheidung als Sonderbetriebsunterprogramm bezeichnet. Das oder jedes Sonderbetriebsunterprogramm umfasst im Vergleich zum Hauptprogramm eines Automatisierungsgerätes oder zum Normalbetriebsunterprogramm wie hier beschrieben nur Befehle für einen Aufruf oder eine Einplanung einer reduzierten Anzahl von Unterprogrammen. Mit anderen Worten lässt sich der Ansatz gemäß der Erfindung damit auch so ausdrücken, dass an die Stelle des bisherigen einen Hauptprogramms für jedes Automatisierungsgerät im Grunde zumindest zwei Hauptprogramme treten, wobei das Normalbetriebsunterprogramm einem ersten Hauptprogramm und das zumindest eine Sonderbetriebsunterprogramm einem anderen Hauptprogramm entspricht. Der Aufruf eines dieser Hauptprogramme in Abhängigkeit von dem Status des Automatisierungsgerätes braucht nicht vom Benutzer programmiert werden und es reicht aus, wenn insoweit eine Möglichkeit zur Parametrierbarkeit, z. B. zur Angabe relevanter Kriterien für die Ermittlung des jeweiligen Status, besteht. Die Beschreibung wird gleichwohl mit den Begriffen Hauptprogramm, Normalbetriebsunterprogramm und Sonderbetriebsunterprogramm fortgesetzt.

Der Vorteil der Erfindung besteht darin, dass, wenn mit dem Sonderbetriebsunterprogramm nur eine reduzierte Anzahl von Unterprogrammen aktiviert (aufgerufen oder eingeplant) wird, bereits damit eine Energieeinsparung einhergeht, weil z. B. die Steuerung und Überwachung des technischen Prozesses durch Aufnahme des Prozessabbildes der Eingänge und Ermittlung des Prozessabbildes der Ausgänge dann zumindest zeitweise deaktiviert werden kann, wenn der jeweilige Prozess selbst inaktiv ist. Darüber hinaus können Statistikfunktionen, z. B. zur Protokollierung, und dafür vorgesehene Unterprogramme deaktiviert werden. Ähnlich verhält es sich mit Unterprogrammen, die Anzeigemittel nach Art von Monitoren und dergleichen ansteuern, um z. B. eine Prozessvisualisierung und Ähnliches zu realisieren.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die reduzierte Anzahl von Unterprogrammen, die von dem oder einzelnen Sonderbetriebsunterprogrammen noch zur Aktivierung umfasst ist, im Wesentlichen, insbesondere ausschließlich, Unterprogramme ein und derselben Kategorie sind. Damit kann z. B. erreicht werden, dass, wenn in Abhängigkeit von dem Status des Automatisierungsgerätes nur noch das oder ein Sonderbetriebsunterprogramm aufgerufen wird, damit nur noch Unterprogramme aktiviert werden, die z. B. gewährleisten, dass Kommunikationsfunktionalitäten aufrechterhalten bleiben.

Besonders bevorzugt ist insoweit vorgesehen, dass die Unterprogramme einer diese als Kommunikationsunterprogramme, also Unterprogramme zum Datenaustausch mit anderen Automatisierungsgeräten, qualifizierenden Kategorie angehören. Wenn auf diese Weise Kommunikationsfunktionalitäten in jedem Falle aufrechterhalten werden, ist bei einer späteren Umschaltung des Status des Automatisierungsgerätes ohne Verzögerung eine Rückkehr zum Aufruf des Normalbetriebsunterprogramms möglich.

Weiter bevorzugt ist vorgesehen, dass das Sonderbetriebsunterprogramm Befehle zum Abschalten einzelner Funktionen des Automatisierungsgerätes umfasst. Damit kann eine zusätzliche Energieeinsparung dadurch erreicht werden, dass nicht nur auf der Softwareseite die Funktionalität des Automatisierungsgerätes reduziert wird, indem bisher aufgeführte Unterprogramme nicht mehr ausgeführt werden, sondern dass zusätzlich auch bestimmte Funktionen gezielt ab- oder umgeschaltet werden.

Das Abschalten einzelner Funktionen kann sich z. B. auf das Abschalten einer Anzeigeeinheit oder auf das Abschalten der Energieversorgung für sonstige von dem Automatisierungsgerät umfasste Peripherie beziehen. Ein eventuelles Umschalten kann sich z. B. auf eine Reduktion einer zum Betrieb des Automatisierungsgerätes herangezogenen Taktfrequenz beziehen. Genauso kann sich ein eventuelles Umschalten darauf beziehen, dass das Sonderbetriebsunterprogramm zwar mit normaler, also nicht oder nur geringfügig reduzierter Taktfrequenz ausgeführt wird, dass jeweils am Ende eines zyklischen Teils des Sonderbetriebsunterprogramms aber das Automatisierungsgerät für einen vorgegebenen oder vorgebbaren Zeitraum in einen Energiesparmodus versetzt wird. D.h. der zyklische Teils des Sonderbetriebsunterprogramms wird für einen gewissen Zeitraum "suspendiert" und nach Ablauf der dafür definierten Zeitspanne automatisch wieder aktiv. Während das Sonderbetriebsunterprogramm suspendiert ist, ist der Energieverbrauch des Automatisierungsgeräts reduziert. Zum Suspendieren kann insoweit vorgesehen werden, dass das Sonderbetriebsunterprogramm nach Ablauf der definierten Zeitspanne durch einen Interrupt "geweckt" wird. Im Ergebnis muss also während der zur Energieeinsparung vorgesehenen Zeitspanne nur eine Schaltung mit Energie versorgt werden, die den Zeitablauf überwacht und am Ende der Zeitspanne ein Signal generiert, das vom Automatisierungsgerät als "Weckinterrupt" aufgefasst wird.

Die o. g. Aufgabe wird ebenfalls mit einem Verfahren zum Betrieb eines Automatisierungsgerätes wie hier und im Folgenden definiert gelöst, indem der Status, anhand dessen das Hauptprogramm das Normalbetriebsunterprogramm und eines der Sonderbetriebsunterprogramme aufruft, durch ein externes Ereignis beeinflusst wird, welches durch das Normalbetriebsunterprogramm oder das Sonderbetriebsunterprogramm oder davon jeweils aufgerufene oder eingeplante Unterprogramme detektiert wird. Auf diese Weise besteht die Möglichkeit, dass unabhängig davon, ob anhand des Status des Automatisierungsgerätes durch das Hauptprogramm das Normalbetriebsunterprogramm oder eines der Sonderbetriebsunterprogramme aufgerufen wird, eine eventuelle Statusänderung in jedem Fall detektiert wird und eine Umschaltung vom Normalbetriebsunterprogramm zu einem der Sonderbetriebsunterprogramme oder von einem der Sonderbetriebsunterprogramme zum Normalbetriebsunterprogramm möglich ist. Das Automatisierungsgerät kann also von einem externen Automatisierungsgerät in einen "Standby-Modus" versetzt werden, der den Übergang zu einem der Sonderbetriebsunterprogramme umfasst, und in gleicher Weise wieder "aufgeweckt" werden, so dass wieder das Normalbetriebsunterprogramm mit der vollen für die jeweilige Automatisierungslösung vorgesehenen Funktionalität aufgerufen wird.

Für die Detektion eines externen Ereignisses kann ein sowohl vom Normalbetriebsunterprogramm und dem oder jedem Sonderbetriebsunterprogramm aktiviertes Unterprogramm vorgesehen sein, das z. B. den Status eines am Gehäuse des Automatisierungsgerätes vorgesehenen Schaltelements abfragt, so dass das Automatisierungsgerät durch Betätigen des Schalters in den Standby-Modus versetzt werden oder aufgeweckt werden kann. Ein solcher Schalter kann auch an zentraler Stelle im Automatisierungssystem vorgesehen sein, so dass der Status des Schalters durch ein diesem benachbartes Automatisierungsgerät an andere Automatisierungsgeräte weitergeleitet wird. Dann sind zur Detektion des externen Ereignisses bei den entfernten Automatisierungsgeräten als Kommunikationsunterprogramm fungierende Unterprogramme notwendig. Besonders komfortabel wird das Umschalten zwischen einem Energiespar- oder Standby-Modus und einem Normalbetriebsmodus dann, wenn eine solche Umschaltung zentral gesteuert wird und z. B. von einer übergeordneten Einheit an alle anderen von dem Automatisierungssystem umfassten Automatisierungsgeräte gemeldet wird, so dass auch in diesem Fall als Kommunikationsunterprogramm fungierende Unterprogramme auf Seiten der einzelnen Automatisierungsgeräte in die Detektion des externen Ereignisses involviert sind.

Das Verfahren wie hier skizziert und nachfolgend weiter beschrieben ist bevorzugt in Software ausgeführt, so dass sich die Erfindung insoweit auch auf ein Computerprogramm zur Ausführung des Verfahrens und einen Datenträger mit einem solchen Computerprogramm bezieht. Weiter bezieht sich die Erfindung auch auf ein Computersystem, insbesondere ein Automatisierungsgerät, auf dem ein derartiges Computerprogramm geladen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit einer Mehrzahl von Automatisierungsgeräten zur Steuerung eines technischen Prozesses,
- FIG 2: ein Automatisierungsgerät mit einem Speicher und einem darin vorgehaltenen Steuerungsprogramm zur Realisierung einer Automatisierungslösung für den technischen Prozess,
- FIG 3: ein Hauptprogramm eines Steuerungsprogramms und
- FIG 4: ein Steuerungsprogramm mit einem Hauptprogramm, das ein Normalbetriebsunterprogramm oder ein Sonderbetriebsunterprogramm in Abhängigkeit von einem Status des Automatisierungsgerätes aufruft.

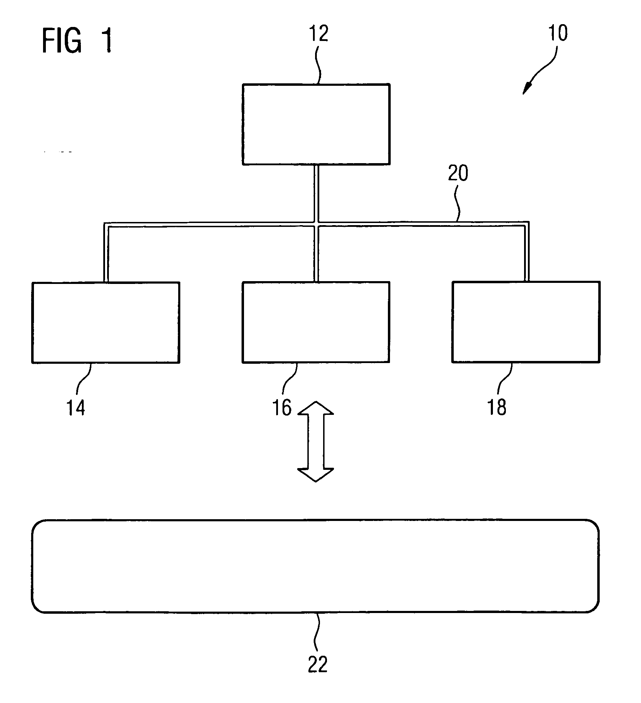

FIG 1 zeigt in schematisch vereinfachter Weise ein Automatisierungssystem 10, das eine Anzahl Automatisierungsgeräte 12, 14, 16, 18 umfasst, die über einen Bus 20 kommunikativ verbunden sind und zur Steuerung eines nicht näher dargestellten technischen Prozesses 22, normalerweise eines industriellen Prozesses, z. B. eines Fertigungsprozesses oder dergleichen, vorgesehen sind. Von den Automatisierungsgeräten 12-18 fungiert normalerweise eines als übergeordnete Einheit, so dass als Beispiel für eines der Automatisierungsgeräte 12 eine speicherprogrammierbare Steuerung genannt werden kann. Andere Automatisierungsgeräte 12-18 des Automatisierungssystems 10 fungieren z. B. als dezentrale Peripheriegeräte und wechselwirken insoweit mit dem Prozess 22, indem im Prozess 22 befindliche Sensorik abgefragt oder im Prozess 22 befindliche Aktorik angesteuert wird.

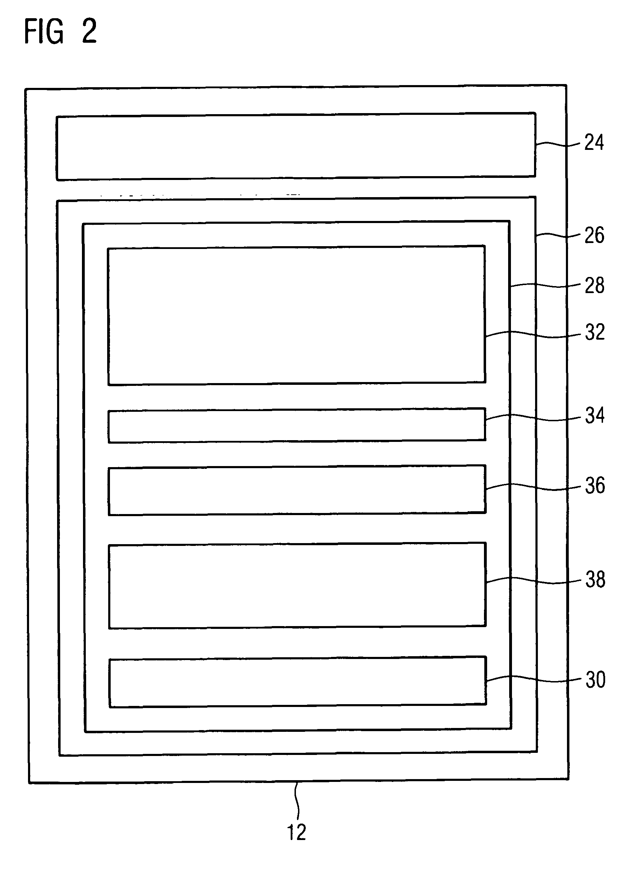

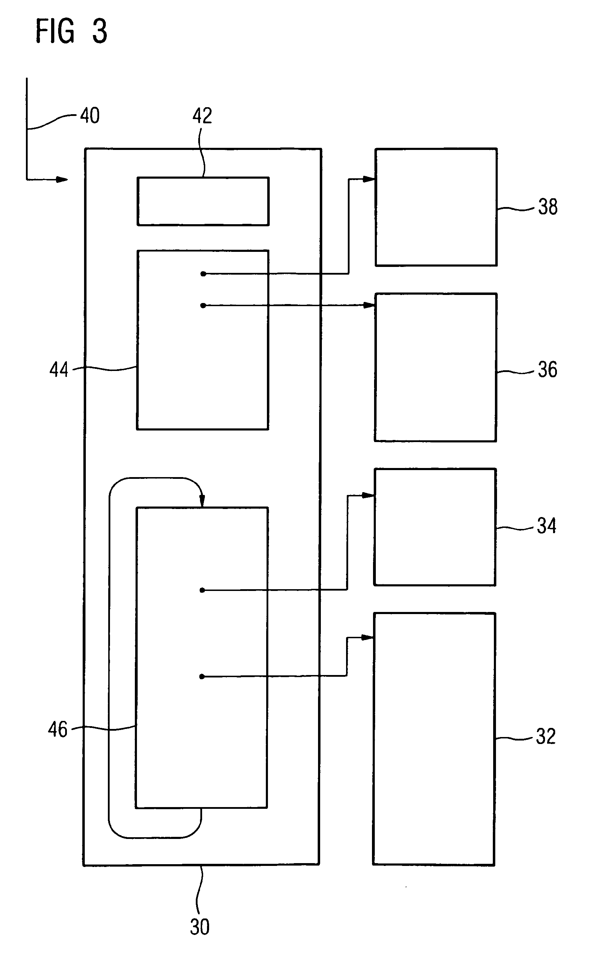

FIG 2 zeigt exemplarisch für alle Arten von Automatisierungsgeräten 12-18 ein Automatisierungsgerät 12 mit weiteren Details in schematisch vereinfachter Form. Danach umfasst jedes Automatisierungsgerät 12 neben weiteren an sich bekannten Einheiten zumindest eine Verarbeitungseinheit 24 nach Art eines Prozessors und einen Speicher 26. In dem Speicher 26 wird ein Steuerungsprogramm 28 vorgehalten, das zumindest ein Hauptprogramm 30 umfasst. Daneben umfasst das Steuerungsprogramm 28 ein oder mehrere von dem Hauptprogramm 30 aufgerufene oder eingeplante Unterprogramme 32, 34, 36, 38. Weitere Details werden mit Bezug auf FIG 3 erläutert.

FIG 3 zeigt eine schematisch vereinfachte Darstellung eines Hauptprogramms 30, wie dies bisher von Automatisierungsgeräten 12 umfasst ist. Das Hauptprogramm 30 wird durch eine dem jeweiligen Benutzer normalerweise nicht zugängliche Funktionalität, z. B. das Betriebssystem des Automatisierungsgerätes 12, gestartet. Dies soll durch einen ersten Pfeil 40 veranschaulicht sein. Das Hauptprogramm 30 umfasst in einem ersten Abschnitt normalerweise Initialisierungsbefehle 42 und sodann einen Einplanungsteil 44, in dem spezielle Unterprogramme 36, 38 zur Ausführung, also z. B zur Ausführung in einem festen Zeitraster, eingeplant werden. Des Weiteren umfasst das Hauptprogramm 30 einen zyklischen Teil 46, der kontinuierlich abgearbeitet wird und ggf. durch eingeplante Unterprogramme 36, 38 unterbrochen wird, wenn für diese eine jeweilige Ausführungsbedingung erfüllt ist. Der zyklische Teil 46 selbst kann eines oder mehrere Unterprogramme 32, 34 aufrufen. Der Ausführungszeitpunkt solcher Unterprogramme 32, 34 hängt dann im Wesentlichen von der Position eines Befehls zu deren Aufruf im zyklischen Teil 46 ab. Nicht dargestellt ist, dass sowohl aufgerufene Unterprogramme 32, 34 als auch eingeplante Unterprogramme 36, 38 weitere Unterprogramme aufrufen können. Im Einzelfall kann es auch vorkommen, dass im zyklischen Teil 46 Unterprogramme zur Ausführung eingeplant und zu einem anderen Zeitpunkt wieder deaktiviert werden oder dass dies mit aufgerufenen Unterprogrammen 32, 34 erfolgt.

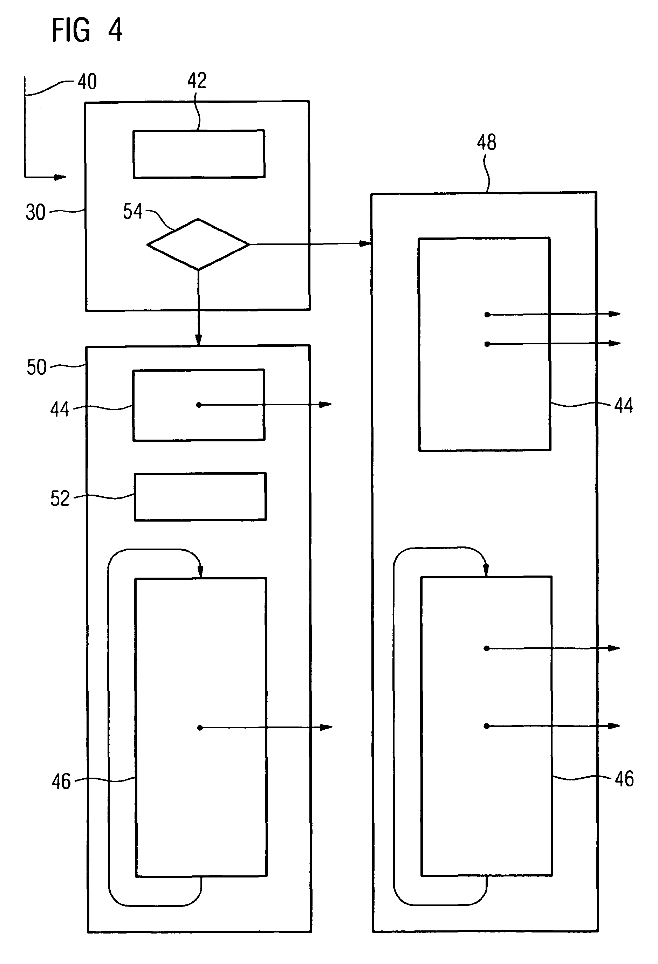

FIG 4 versucht den Ansatz gemäß der Erfindung zu veranschaulichen. Danach ist das Hauptprogramm 30 deutlich reduziert und umfasst neben den Initialisierungsbefehlen 42 nur noch einen Aufruf für entweder ein Normalbetriebsunterprogramm 48 oder eines oder mehrere Sonderbetriebsunterprogramme 50. Das Normalbetriebsunterprogramm 48 tritt hinsichtlich des Aufrufens und Einplanens von Unterprogrammen 32-38 (FIG 3) an die Stelle des bisherigen Hauptprogramms 30 (FIG 2). Das Normalbetriebsunterprogramm 48 umfasst also den Einplanungsteil 44 und den zyklischen Teil 46, so wie dies bisher vom Hauptprogramm 30 wie in FIG 3 dargestellt umfasst war. Das oder jedes Sonderbetriebsunterprogramm 50 umfasst ebenfalls einen Einplanungsteil 44 und einen zyklischen Teil 46. Im Vergleich zum Normalbetriebsunterprogramm 48 umfasst das oder jedes Sonderbetriebsunterprogramm 50 jedoch nur Befehle für einen Aufruf oder eine Einplanung einer reduzierten Anzahl von Unterprogrammen 32-38 (FIG 3). Dies ist in der Darstellung in FIG 4 durch die zwei Pfeile, mit denen eine Einplanung und ein Aufruf von Unterprogrammen 32-38 veranschaulicht sein soll, im Gegensatz zu vier entsprechenden Pfeilen beim Normalbetriebsunterprogramm 48 verdeutlicht.

Dadurch, dass das Sonderbetriebsunterprogramm 50 nur eine reduzierte Anzahl von Unterprogrammen 32-38 aktiviert, ergibt sich für das Automatisierungsgerät 12 (FIG 2) insgesamt eine reduzierte Funktionalität, die bei dem Automatisierungsgerät 12-18 oder beim davon gesteuerten Prozess (FIG 1) oder Teilprozess zu einer Energieeinsparung führt. Bei den von dem Sonderbetriebsunterprogramm 50 noch aktivierten Unterprogrammen 32-38 handelt es sich zumindest um Kommunikationsunterprogramme, also Unterprogramme 32-38 zum Datenaustausch mit anderen Automatisierungsgeräten 14-18 (FIG 1). Bei einer Umschaltung, die für das Hauptprogramm 30 wieder eine Aktivierung des Normalbetriebsunterprogramms 48 bewirkt, sind dementsprechend Kommunikationsbeziehungen mit anderen Automatisierungsgeräten 16-18 intakt. Die Umschaltung kann also ohne Zeitverlust erfolgen.

In FIG 4 ist noch gezeigt, dass das Sonderbetriebsunterprogramm 50 auch Deaktivierungsbefehle 52 zum Abschalten einzelner Funktionen des Automatisierungsgerätes 12 umfasst. Dies kann sich auf das Abschalten spezieller Peripherie des Gerätes, wie z. B. eine Anzeigeeinrichtung (nicht dargestellt) oder eine Reduktion einer Taktfrequenz, die zum Betrieb des Automatisierungsgerätes 12 herangezogen wird, beziehen.

In FIG 4 ist für das Hauptprogramm 30 zur Illustration, dass dieses Befehle für einen Aufruf des Normalbetriebsunterprogramms 48 oder eines der Sonderbetriebsunterprogramme 50 in Abhängigkeit von einem Status des Automatisierungsgerätes 12 umfasst, ein Fallunterscheidungsblock 54 gezeigt, der Programmcodeanweisungen repräsentiert, mit denen in an sich bekannter Art und Weise z. B. eine einen Status des Automatisierungsgerätes 12 repräsentierende Variable abgefragt wird und in Abhängigkeit vom Wert dieser Variable entweder zum Normalbetriebsunterprogramm 48 oder zu einem Sonderbetriebsunterprogramm 50 verzweigt wird. Ein solcher Status des Automatisierungsgerätes 12 kann sich z. B. anhand eines externen Signals ergeben, das z. B. von einem übergeordneten Leitsystem oder über einen diskreten Digitaleingang erhalten wird. Des Weiteren kann sich der Status anhand einer zeitlichen Bedingung z. B. in Abhängigkeit von einer internen Uhr des Automatisierungsgerätes ergeben.

Die Generierung von Normalbetriebsunterprogramm 48 und einem oder mehreren Sonderbetriebsunterprogrammen 50 kann auch durch ein Projektierungswerkzeug in einer für den Anwender transparenten Art und Weise erfolgen. Dazu markiert ein Projektierer in seinem Projektierungswerkzeug einzelne Unterprogramme 32-38 und weist diesen ein Attribut zu, das kennzeichnen, ob deren Ausführung oder Einplanung vom Sonderbetrieb umfasst sein soll. Auf dieser Basis kann der Programmierer im Grunde ein Hauptprogramm 30 erstellen, wie dies bisher erfolgt ist, und ein solches Hauptprogramm 30 umfasst quasi sowohl das Normalbetriebsunterprogramm 48 als auch jedes Sonderbetriebsunterprogramm 50, indem die in FIG 4 gezeigte Fallunterscheidung 54 jeder Einplanung oder jedem Aufruf eines Unterprogramms 32-38 im Hauptprogramm 30 vorangestellt ist. Auch auf diesem Wege lässt sich sicherstellen, dass Funktionen, die während des zur Energieeinsparung vorgesehenen Sonderbetriebs nicht erforderlich sind, nicht zur Ausführung gelangen.

Die Vorteile der Erfindung aus Anwendersicht liegen darin, dass sämtliche Peripherie feingranular abgeschaltet werden kann, ohne dass z. B. kritische Kommunikationsverbindungen abgebrochen werden. Die Funktion des jeweiligen Automatisierungsgerätes 12-18 wird in einem vorgegebenen minimalen Umfang aufrechterhalten und z. B. Kommunikationsaufgaben werden weiter abgearbeitet. Auf dies Art und Weise kann das Automatisierungsgerät oder ein komplettes Automatisierungssystem mit mehreren derartigen Automatisierungsgeräten 12-18 über einen Befehl einer entfernten Einheit wieder angefahren werden. Eventuelle Diagnosemeldungen oder sonstige Ereignisse können während eines solchen Sonderbetriebs erfasst und gemeldet werden. Optional besteht die Möglichkeit, noch ein Minimalprogramm abzuarbeiten (zyklischer Teil 46 innerhalb des Sonderbetriebsunterprogramms 50 wie in FIG 4 dargestellt). Beispielsweise ist es bei fördertechnischen Applikationen, wie z. B. Elektrohängebahnen, notwendig, auch während eines solchen Sonderbetriebs Positionen der einzelnen Gehänge zu erfassen. Hier wird häufig manuell eingegriffen. D. h. auch während einer Ruhephase werden Gehänge hinzugefügt, entfernt oder verschoben. Dann gilt es, auch in diesem Ruhezustand noch genau die Position dieser einzelnen Gehänge zu erfassen, um nach einem Wiederanlauf Kollisionen zu vermeiden und Daten über die korrekte Zuordnung der einzelnen Elemente untereinander zu haben. Bei einem solchen Szenario können über ein Minimalprogramm beispielsweise in Schalterstellungen und Signale von SSI-Gebern erfasst und gespeichert werden.

Damit lässt sich die Erfindung kurz wie folgt darstellen:
Es werden ein Automatisierungsgerät 12-18 und ein Verfahren zu dessen Betrieb angegeben, wobei das Automatisierungsgerät 12-18 ein Steuerungsprogramm 28 zur Steuerung und/oder Überwachung eines technischen Prozesses 22 und das Steuerungsprogramm 28 ein Hauptprogramm 30 und ein oder mehrere davon aufgerufene oder eingeplante Unterprogramme 32-38 umfasst, bei dem das Steuerungsprogramm 28 ein Normalbetriebsunterprogramm 48 und zumindest ein Sonderbetriebsunterprogramm 50 umfasst, bei dem das Hauptprogramm 30 Befehle 52 für einen Aufruf des Normalbetriebsunterprogramms 48 oder eines der Sonderbetriebsunterprogramme 50 in Abhängigkeit von einem Status des Automatisierungsgerätes 12-18 umfasst, wobei das Normalbetriebsunterprogramm 48 hinsichtlich des Aufrufens und Einplanens von Unterprogrammen 32-38 an die Stelle des Hauptprogramms 30 tritt und wobei das oder jedes Sonderbetriebsunterprogramm 50 für eine reduzierte Anzahl von Unterprogrammen 32-38 Befehle 52 für deren Aufruf oder Einplanung umfasst, so dass immer, wenn das oder ein Sonderbetriebsunterprogramm 50 aufgerufen wird oder im Hauptprogramm 30 eine funktionsäquivalente Umschaltung zur Reduktion der eingeplanten oder aufgerufenen Unterprogramme 32-38 aktiviert wird, die Funktionalität des Automatisierungsgerätes 12-18 insgesamt reduziert und damit eine gewünscht Energieeinsparung erreicht ist.

## Patentansprüche

1. Automatisierungsgerät (12-18) mit einem Steuerungsprogramm (28) zur Steuerung und/oder Überwachung eines technischen Prozesses (22), wobei das Steuerungsprogramm (28) ein Hauptprogramm (30) und ein oder mehrere davon aufgerufene oder eingeplante Unterprogramme (32-38) umfasst,
wobei,
- das Steuerungsprogramm (28) ein Normalbetriebsunterprogramm (48) und zumindest ein Sonderbetriebsunterprogramm (50) umfasst,
- das Hauptprogramm (30) Befehle für einen Aufruf des Normalbetriebsunterprogramms (48) oder eines der Sonderbetriebsunterprogramme (50) in Abhängigkeit von einem Status des Automatisierungsgerätes (12-18) umfasst, wobei der Status durch ein externes Ereignis beeinflusst ist,
- das Normalbetriebsunterprogramm (48) hinsichtlich des Aufrufens und Einplanens von Unterprogrammen (32-38) an die Stelle des Hauptprogramms (30) tritt und
- das oder jedes Sonderbetriebsunterprogramm (50) für eine reduzierte Anzahl von Unterprogrammen (32-38) Befehle (52) für deren Aufruf oder Einplanung umfasst,
dadurch gekennzeichet, dass die reduzierte Anzahl von Unterprogrammen (32-38) Unterprogramme (32-38) einer diesen als Kommunikationsunterprogramme qualifizierenden Kategorie umfasst, die gewährleisten, dass Kommunikationsfunktionalitäten aufrechterhalten bleiben.

2. Automatisierungsgerät nach Anspruch 1, wobei die reduzierte Anzahl von Unterprogrammen (32-38) ausschließlich Unterprogramme (32-38) der diese als Kommunikationsunterprogramme qualifizierenden Kategorie umfasst.

3. Automatisierungsgerät (12-18) nach einem der vorangehenden Ansprüche, wobei das Sonderbetriebsunterprogramm (50) Befehle (52) zum Abschalten einzelner Funktionen des Automatisierungsgerätes (12-18) umfasst.

4. Automatisierungsgerät (12-18) nach einem der vorangehenden Ansprüche, wobei das Sonderbetriebsunterprogramm (50) einen Befehl (52) zum Herabsetzen einer zum Betrieb des Automatisierungsgerätes (12-18) herangezogenen Taktfrequenz umfasst.

5. Verfahren zum Betrieb eines Automatisierungsgerätes (12-18) nach einem der vorangehenden Ansprüche,
wobei das Normalbetriebsunterprogramm (48) hinsichtlich des Aufrufens und Einplanens von Unterprogrammen (32-38) an die Stelle des Hauptprogramms (30) tritt;
und das oder jedes Sonderbetriebsunterprogramm (50) eine reduzierte Anzahl von Unterprogrammen (32-38) aufruft oder einplant,
wobei der Status, anhand dessen das Hauptprogramm (30) das Normalbetriebsunterprogramm (48) oder eines der Sonderbetriebsunterprogramme (50) aufruft, durch ein externes Ereignis beeinflusst wird, welches durch das Normalbetriebsunterprogramm (48) oder das Sonderbetriebsunterprogramm (50) oder davon jeweils aufgerufene oder eingeplante Unterprogramme (32-38) detektiert wird,
dadurch gekennzeichet, dass die reduzierte Anzahl von Unterprogrammen (32-38) Unterprogramme (32-38) einer diese als Kommunikationsunterprogramme qualifizierenden Kategorie umfasst, die gewährleisten, dass Kommunikationsfunktionalitäten aufrechterhalten bleiben.

6. Verfahren nach Anspruch 6 zum Betrieb eines Automatisierungsgerätes nach einem der Ansprüche 3 bis 5, wobei das externe Ereignis von einem anderen Automatisierungsgerät (12-18) signalisiert und durch ein als Kommunikationsunterprogramm fungierendes Unterprogramm (32-38) detektiert wird.

7. Computerprogramm zur Ausführung eines Verfahrens gemäß einem der Ansprüche 6 oder 7.

8. Datenträger mit einem Computerprogramm nach Anspruch 8.

9. Computersystem, insbesondere Automatisierungsgerät (12-18), nach einem der Ansprüche 1 bis 5, auf dem ein Computerprogramm nach Anspruch 8 geladen ist.

## Claims

1. Automation device (12-18) having a control program (28) for controlling and/or monitoring a technical process (22), the control program (28) comprising a main program (30) and one or more subroutines (32-38) scheduled or called by the latter,
- the control program (28) comprising a normal operation subroutine (48) and at least one special operation subroutine (50),
- the main program (30) comprising instructions for calling the normal operation subroutine (48) or one of the special operation subroutines (50) on the basis of a status of the automation device (12-18), the status being influenced by an external event,
- the normal operation subroutine (48) taking the place of the main program (30) with regard to the calling and scheduling of subroutines (32-38), and
- the or each special operation subroutine (50) comprising, for a reduced number of subroutines (32-38), instructions (52) for calling or scheduling the latter,
**characterized in that** the reduced number of subroutines (32-38) comprises subroutines (32-38) of a category which qualifies them as communication subroutines which ensure that communication functionalities are maintained.

2. Automation device according to Claim 1, the reduced number of subroutines (32-38) comprising solely subroutines (32-38) of the category which qualifies them as communication subroutines.

3. Automation device (12-18) according to one of the preceding claims, the special operation subroutine (50) comprising instructions (52) for switching off individual functions of the automation device (12-18).

4. Automation device (12-18) according to one of the preceding claims, the special operation subroutine (50) comprising an instruction (52) for reducing a clock frequency used to operate the automation device (12-18).

5. Method for operating an automation device (12-18) according to one of the preceding claims, the normal operation subroutine (48) taking the place of the main program (30) with regard to the calling and scheduling of subroutines (32-38), and the or each special operation subroutine (50) calling or scheduling a reduced number of subroutines (32-38), the status which is used by the main program (30) to call the normal operation subroutine (48) or one of the special operation subroutines (50) being influenced by an external event which is detected by the normal operation subroutine (48) or the special operation subroutine (50) or subroutines (32-38) respectively scheduled or called thereby, **characterized in that** the reduced number of subroutines (32-38) comprises subroutines (32-38) of a category which qualifies them as communication subroutines which ensure that communication functionalities are maintained.

6. Method according to Claim 6 for operating an automation device according to one of Claims 3 to 5, the external event being signalled by another automation device (12-18) and being detected by a subroutine (32-38) which acts as a communication subroutine.

7. Computer program for carrying out a method according to either of Claims 6 and 7.

8. Data storage medium having a computer program according to Claim 8.

9. Computer system, in particular an automation device (12-18), according to one of Claims 1 to 5, onto which a computer program according to Claim 8 is loaded.

## Revendications

1. Appareil ( 12 à 18 ) d'automatisation ayant un programme ( 28 ) de commande pour la commande et/ou le contrôle d'une opération ( 22 ) technique, le programme ( 28 ) de commande comprenant un programme ( 30 ) principal et un ou plusieurs sous-programmes ( 32 à 38 ), qui en sont appelés ou planifiés,
- dans lequel le programme ( 28 ) de commande comprend un sous-programme ( 48 ) de fonctionnement normal et au moins un sous-programme ( 50 ) de fonctionnement particulier,
- le programme ( 30 ) principal comprend des instructions d'appel du sous-programme ( 48 ) de fonctionnement normal ou de l'un des sous-programmes ( 50 ) de fonctionnement particulier, en fonction d'un état de l'appareil ( 12 à 18 ) d'automatisation, l'état étant influencé par un événement extérieur,
- le sous-programme ( 48 ) de fonctionnement normal vient, en ce qui concerne l'appel et la planification de sous-programmes (32 à 38), à la place du programme ( 30 ) principal, et
- le ou chaque sous-programme ( 50 ) de fonctionnement particulier comprend, pour un nombre réduit de sous-programmes ( 32 à 38 ), des instructions ( 52 ) pour leur appel ou leur planification,
**caractérisé en ce que** le nombre réduit de sous-programmes ( 32 à 38 ) comprend des sous-programmes ( 32 à 38 ) d'une catégorie les qualifiant comme sous-programmes de communication, qui assurent que des fonctionnalités de communication restent conservées.

2. Appareil d'automatisation suivant la revendication 1, dans lequel le nombre réduit de sous-programmes ( 32 à 38 ) comprend exclusivement des sous-programmes ( 32 à 38 ) de la catégorie les qualifiant comme sous-programmes de communication.

3. Appareil ( 12 à 18 ) d'automatisation suivant l'une des revendications précédentes, dans lequel le sous-programme ( 50 ) de fonctionnement particulier comprend des instructions ( 52 ) de mise à l'arrêt de diverses fonctions de l'appareil ( 12 à 18 ) d'automatisation.

4. Appareil ( 12 à 18 ) d'automatisation suivant l'une des revendications précédentes, dans lequel le sous-programme ( 50 ) de fonctionnement particulier comprend une instruction ( 52 ) d'abaissement de la fréquence d'horloge mise à profit pour le fonctionnement de l'appareil ( 12 à 18 ) d'automatisation.

5. Procédé pour faire fonctionner un appareil ( 12 à 18 ) d'automatisation suivant l'une des revendications précédentes, dans lequel le sous-programme ( 48 ) de fonctionnement normal vient, en ce qui concerne l'appel et la planification de sous-programmes ( 32 à 38 ), à la place du programme ( 30 ) principal ;
et le ou chaque sous-programme ( 50 ) de fonctionnement particulier appelle ou planifie un nombre réduit de sous-programmes ( 32 à 38 ), l'état au moyen duquel le programme ( 30 ) principal appelle le sous-programme de fonctionnement normal ou l'un des sous-programmes ( 50 ) de fonctionnement particulier étant influencé par un événement extérieur, qui est détecté par le sous-programme ( 48 ) de fonctionnement normal ou par le sous-programme ( 50 ) de fonctionnement particulier ou par des sous-programmes ( 32 à 38 ) qui en sont respectivement appelés ou planifiés,
**caractérisé en ce que** le nombre réduit de sous-programmes ( 32 à 38 ) comprend des sous-programmes ( 32 à 38 ) d'une catégorie les qualifiant comme sous-programmes de communication, qui assurent que des fonctionnalités de communication restent conservées.

6. Procédé suivant la revendication 5 pour faire fonctionner un appareil d'automatisation suivant l'une des revendications 2 à 4, dans lequel on signale l'événement extérieur par un autre appareil ( 12 à 18 ) d'automatisation et on le détecte par un sous-programme ( 32 à 38 ) servant de sous-programme de communication.

7. Programme d'ordinateur pour effectuer un procédé suivant l'une des revendications 5 ou 6.

8. Support de données ayant un programme d'ordinateur suivant la revendication 7.

9. Système informatique, notamment appareil ( 12 à 18 ) d'automatisation suivant l'une des revendications 1 à 4, sur lequel est chargé un programme d'ordinateur suivant la revendication 7.
